# EUROPEAN PATENT APPLICATION

(11) **EP 4 339 170 A1**
(43) Date of publication of application: **20.03.2024**
(21) Application number: 22195807.7
(22) Date of filing: 15.09.2022
(51) Int. Cl.: C03C 17/36, G06F 3/00

(54) **GLAZING WITH TOUCH SENSING CAPABILITIES**

(71) Applicant: AGP Worldwide Operations GmbH, 6300 Zug (CH)
(72) Inventor: KRASNOV, Alexey, Canton, Michigan, 48188 (US); MOSCOSO ROJAS, Andrés Camilo, 9052 Zwijnaarde, Ghent (BE); SARMIENTO SANTOS, Andrés Fernando, Canton, Michigan, 48188 (US); SIVARS, Andris, 9052 Zwijnaarde, Ghent (BE); CÉSPEDES BERROCAL, David, 15081 Lima (PE)
(74) Representative: ABG Intellectual Property Law, S.L.

(57) **Abstract**

The present invention falls in the field of automotive glazing, more particularly automotive sidelites and roofs, and relates to a glazing having a coating with capacitive touch sensing capabilities. The invention also relates to a method for manufacturing a glazing with touch sensing capabilities.

## Description

### FIELD OF THE INVENTION

The present invention falls in the field of automotive glazing, more particularly automotive sidelites and roofs, and relates to a glazing having a coating with capacitive touch sensing capabilities. The invention also relates to a method for manufacturing such glazing with touch sensing capabilities.

### PRIOR ART

Touch technology and the corresponding touch sensing methods are commonly known in the state of the art to provide user-friendly and intuitive interfaces on displays or other types of devices, such as interactive glazing. The most common categories among them are project capacitive and surface capacitive, resistive, IR detection, camera tracking, surface-acoustic-wave and FTIR. In particular, capacitive touch technology uses a uniform electrostatic field to detect touch commands.

However, the main drawbacks of the touch technology in the field of automotive vehicles application, particularly on the glazing, suitable for being used in automotive sidelites or roofs, are the following:
- There is a significant complexity of the supporting hardware and the volume capacity required to house it next to or on the glazing.
- There is a need of defining the transmitting and receiving electrodes by either laser ablation or lithography.
- There are difficulties for scaling-up the previously mentioned touch technologies to larger surfaces, particularly curved ones, such as roofs.

Recently, an alternative capacitive touch method known as Electric Field Tomography, usually referred as EFT, has been developed. The Electric Field Tomography capacitive touch technology is a hybrid between the surface capacitive touch and the projected capacitive touch and it was originally conceived to work with opaque conductive surfaces having sheet resistance between 500 Ω/*sq* and 50 *M*Ω/*sq.* EFT provides different advantages such as scalability, a better ability to work on complex surfaces, including surfaces presenting irregular shapes, and a lower cost of implementation.

Coatings with such high levels of sheet resistance are not currently used in automotive glazing. For comparison, typical automotive glazing using solar-control coatings are normally implementing silver-inclusive solar-control thin-film (*aka* coating) stacks having a sheet resistance lower than 3 Ω/*sq* and low-emissivity stacks with sheet resistance lower than 50 Ω/*sq.* However, using coatings having such low sheet resistance levels for EFT is impractical due to an insufficient electrical differential between adjacent areas and, as a result, the inability to accurately detect the location of a touch.

A common EFT device includes a substrate, such as glass, coated with a conductive coating, preferably located on an outer surface of said substrate so that it is exposed to touch, a set of driving and sensing electrodes equidistantly arranged on the perimeter of the coating and electrically connected to it, and the electronics to drive the device by applying an electric field to the conductive surface and sensing its electrical response.

The signal applied to the surface of an EFT device is an AC voltage signal of 0 to 5 V and frequencies between 100 kHz to 10 MHz. The voltage is applied between two adjacent electrodes, then to the next pair of electrodes, and so on, thus creating a pattern of electric field across the entire area of the coating. As the human body is an electrical conductor, a touch event of the surface of the EFT device is detected through the sensing of a disturbance in the device's electrostatic field, measurable as a change in capacitance for example, generated by contact with the human body, e.g. with the finger. Both the driving and sensing electrodes are typically produced with a conductive ink such as silver, copper, gold or any other conductive material and can be printed on top of the above mentioned highly resistive conductive coating by screen printing, inkjet, aerosol, or dispensing. On top of this conductive trace, a metallic busbar is attached and a Flexible Printed Circuit, also called FPC, is applied on top of the metallic busbar as a means of interconnection. Depending on the required accuracy and the size of the glazing, touch sensors may present a different number of electrodes. Also, different number of electrode pairs may simultaneously be activated.

There is a need in the art for a glazing with capacitive touch sensing capabilities suitable for being installed in a vehicle and a method for manufacturing such glazing with touch sensing capabilities, wherein the glazing comprising an EFT coating has a sufficient sheet resistance, good bendability properties, high tolerance to temperatures required for glass bending (e.g., 650°C), high environmental stability when deposited on a glass surface exposed to air, and a sufficient transparency in the visible range of the electromagnetic spectrum.

There is also a need in the art for a sidelite or a roof suitable for being installed in a vehicle, wherein the sidelite or a roof comprises a glazing with touch sensing capabilities with the aforementioned needs.

### DESCRIPTION OF THE INVENTION

The present invention provides a solution for the above mentioned issues by a glazing with touch sensing capabilities suitable for a vehicle or for another use according to independent claim 1, a sidelite according to claim 9, a roof according to claim 9, an architectural window according to claim 9, a vehicle according to claim 11 and a method for manufacturing a glazing with touch sensing capabilities according to claim 12. In dependent claims, preferred embodiments of the invention are defined.

*In a first inventive aspect, the present invention provides a glazing with touch sensing capabilities for* a *vehicle, the glazing having at least one glass layer having an outer surface and an inner surface, and further comprising:*
- *a coating located on at least a portion* of *at least one of the outer surfaces or at least one of the inner surfaces of the at least one glass layer, wherein the coating comprises:*
   - *a first dielectric layer, and*
   - *a first metal-inclusive layer,*
   *wherein*
   *the first dielectric layer is located between the at least one glass layer and the first metal-inclusive layer,*
   *the first metal-inclusive layer comprises at least one element of the following list: Ni, Cr, Ti, Pd, Pt, Zr, or Al, and*
   *the content of the at least one element is greater or equal to 5 wt.*%,
*and wherein,*
*the coating is not patterned and has* a *sheet resistance Rₛ between* 500 *Ω*/*sq and* 100 *kΩ*/*sq.*

The following terminology is used along the whole document to describe features of the invention.

The term "layer", as used in this context, shall include the common definition of the word, i.e.: a sheet, quantity, or thickness, of material, typically of some homogeneous substance.

The term "glass substrate" or "glass pane" should be understood as a sheet, quantity, or thickness of material, typically of some homogeneous substance. The "glass substrate or pane" may comprise one or more layers.

The term "glass" can be applied to many organic and inorganic materials, including many that are not transparent. From a scientific standpoint, "glass" is defined as a state of matter comprising a non-crystalline amorphous solid that lacks the ordered molecular structure of true solids. Glasses have the mechanical rigidity of crystals with the random structure of liquids.

The term "glazing" should be understood as a product comprised of at least one layer of a transparent material, preferably glass, which serves to provide for the transmission of light and/or to provide for viewing of the side opposite to the viewer and which is mounted in an opening in a building, vehicle, wall or roof or other framing member or enclosure.

The term "not patterned" should be understood as implying that the conductive layer of said coating is not subjected to laser ablation, mechanical scribing nor photolithography which are methods used to define a pattern for touch coatings. In the present disclosure of the invention, the "not patterned" coating has to be considered as a continuous touch layer not requiring patterned electrodes for functioning.

The terms "glass pane" and "laminated glass pane" refer respectively to a glazing having one glass layer and to a laminated glazing having at least two glass layers.

"Laminates", in general, are products comprised of multiple sheets of thin, relative to their length and width, material, with each thin sheet having two oppositely disposed major faces and typically of a relatively uniform thickness, which are permanently bonded to each other across at least one major face of each sheet.

The term "stack" refers to the arrangement in a pile manner of a plurality of layers.

The term "metal-inclusive layer" should be understood as a layer which comprises at least one of its component or material having metallic behavior.

Firstly, the present invention provides a coating located on at least a portion of the outer surface of the innermost glass layer and wherein said coating is not patterned. As mentioned previously, in the present disclosure of the invention, the term "not patterned coating" has to be considered as a continuous touch layer not requiring patterned electrodes for functioning. The fact that the coating is not patterned differentiates the high-sheet-resistance technology (compatible with E-Tomography) of the present invention from any other type of touch sensitive technology, each of which requires at least some patterning to define lines or segments.

Secondly, the coating of the glazing comprises a first dielectric layer located between the at least the glass layer and a first metal-inclusive layer. This first dielectric layer advantageously provides a foundation enhancing adhesion of the metal-inclusive layer to the at least one glass layer. Furthermore, said first dielectric layer advantageously acts as a blocking layer in order to prevent diffusion of sodium or other alkaline elements coming out from the glass layer into the subsequent layers of the coating.

Thirdly, the coating of the glazing comprises a first functional metal-inclusive layer comprising at least one element from the following list: Ni, Cr, Ti, Pd, Pt, Zr, or Al and wherein the content of the at least one element is greater or equal to 5 wt.% of the first metal-inclusive layer. Each of these elements from the list has a natural resistance to oxidation. In particular, Al and Ti form a self-protective ultra-thin oxidized layer when exposed to oxygen which provides self-insulating properties to the metal-inclusive layer of the coating if, for example, they are exposed at unprotected edges of the coating.

Fourthly, the coating of the glazing has a sheet resistance comprised between 500 *Ω*/*sq* and 100 *kΩ*/*sq.* This range of sheet resistance has been demonstrated as being suitable for achieving sufficient electrical potential differential for using the glazing in EFT devices, which is the purpose of the invention. In other words, the conductive coating of the invention has sufficient low sheet resistance level which permits to detect the location of a touch once the conductive coating is part of a EFT device, as well as being particularly suited for heating the glazing with typical AC voltages applied to the surface of an EFT device, from 0 to 5 V, and frequencies between 100 kHz to 10 MHz.

Also in the first inventive aspect of the invention, the coating is located on at least a portion of at least one of the outer surfaces of the at least one glass layer or on at least a portion of at least one of the inner surfaces of the at least one glass layer.

In a particular embodiment, the coating is located on at least a portion of one outer surface of the at least one glass layer or on at least a portion of one inner surface of the at least one glass layer.

In particular embodiments, the coating of the glazing has a sheet resistance comprised between 1 *kΩ*/*sq* and 50 *kΩ*/*sq*, more preferably between 5 *kΩ*/*sq* and 20 *kΩ*/*sq*, and more preferably around 10 *kΩ*/*sq.*

It should be mentioned that the sheet resistance of the coating depends on different aspects, such as the thickness, material type, and the oxidation state of each conductive layer of the coating stack.

Sheet resistance is generally measured with a sheet resistance measuring tool, preferably a 4-point probe tool. For clarification, the resistivity characterizes an intrinsic electrical property of a material, while sheet resistance is an extrinsic property which depends on resistivity, geometry and thickness of said material.

When describing the coating stack, the convention of numbering the coating layers in the order of deposition upon the glass substrate should be used.

Also, throughout this document, when two layers of the glazing are described, the one which is the closest to the substrate shall be referred to as below the second layer. Likewise, the top layer is the very last layer applied, and the bottom layer is the very first layer located upon the substrate. The top of an individual layer is the side of the layer furthest from the substrate while the bottom is the side of the layer which is either in contact with the substrate or oriented towards the substrate in case this layer is not the first layer of the stack.

In an embodiment when the glazing has a single glass layer, said glazing is preferably tempered.

In an embodiment when the glazing has multiple glass layers, said glazing is preferably laminated.

In an embodiment when the coating is deposited on the at least one glass layer, the resulting product is further bent.

*In a particular embodiment, the at least one glass layer of the glazing comprises a first glass layer, a second glass layer and at least one bonding layer between the first and the second glass layer.*

In a particular embodiment, the glazing comprises one bonding layer, such as a thermoplastic (e.g., PVB), having the primary function of bonding the major faces of adjacent layers to each other. These major faces can also be called inner surfaces of the first glass layer and the second glass layer, respectively. In other words, the inner surface of the first glass layer is bonded with the inner surface of the second glass layer.

In this particular case of a laminated glazing having a first and a second glass layer, the first glass layer has an outer surface, also numbered surface 1, and an inner surface, also numbered surface 2, wherein the inner surface of the first glass layer is facing the inner surface of the second glass layer layers. Furthermore, the inner surface of the second glass layer is numbered surface 3 and the outer surface of the second glass layer (also being the interior surface of the glazing), also numbered surface 4, is facing towards the side where the first glass layer is not located.

In an embodiment, the type of glass for the at least one glass layer or for both glass layers of a laminate that may be used include, but are not limited to, common soda-lime variety typical of automotive glazing as well as aluminosilicate, lithium aluminosilicate, borosilicate, glass ceramics, and various other inorganic solid amorphous compositions which undergo a glass transition and are classified as glass including those that are not transparent.

The thickness of the at least one glass layer may vary widely and thus be ideally adapted to the requirements of the individual cases. In an embodiment, the thickness of the at least one glass layer of the glazing of the invention is lower than 5 mm, preferably comprised between 0.3 mm and 5.0 mm, such as between 0.5 mm and 4.0 mm or between 1.0 mm and 3.0 mm. Possible examples of thicknesses of the at least one glass layer are about 1.5 mm, 1.6 mm, 1.7 mm, 1.8 mm, 1.9 mm, 2.0 mm, 2.1 mm, 2.2 mm, 2.3 mm, 2.4 mm, 2.5 mm, 2.6 mm, 2.7 mm, 2.8 mm, 2.9 mm or 3.0 mm. More preferably, the glass layer is about 2.1 mm thick soda-lime glass layer, including ultra-clear, clear or green soda-lime.

Also, the bonding layer has the function of bonding the inner surface of the first glass layer and the inner surface of the second layer together. Preferably, the material selected for the plastic bonding layer is a clear thermoset plastic, also called polyvinyl butyral or PVB. Additionally, ethylene vinyl acetate (EVA) or thermoplastic polyurethane (TPU) may be used as bonding layers.

Additional embodiments of the present invention include a plastic interlayer made of tinted PVB. Tinted PVB interlayers may have different levels of light transmission and can be of different thicknesses. Preferably, the thickness of the plastic bonding layer is comprised between 0.3 mm and 2.0 mm, such as between 0.5 mm and 1.0 mm, e.g. about 0.5 mm, 0.6 mm, 0.7 mm, 0.8 mm, 0.9 mm or 1.0 mm. Particular thicknesses for the plastic bonding layer, e.g. a - tinted - PVB interlayer, are for instance 0.38 mm, 0.631 mm and 0.76 mm.

In an embodiment, the PVB plastic interlayer is comprised of particles that absorb partially the infrared light of the sun. Preferably, the interlayer may have solar attenuating properties.

In the particular embodiment of having two glass layers, the two glass layers are bent once the coating is completely deposited on at least a portion of one of the outer surfaces or one of the inner surfaces.

In an embodiment, the coating is located on the inner surface of the first glass layer (surface 2), or on the inner surface of the second glass layer (surface 3) or the outer surface of the second glass layer (surface 4).

In the embodiment where the coating is located on the outer surface of the second glass layer (surface 4), the two glass layers are laminated positioning the bonding layer in contact with both the inner surfaces (surfaces 2 and 3) of the respective glass layers. However, when the coating is deposited on one of the inner surfaces of the respective glass layers (surface 2 or 3), said two glass layers are laminated positioning the bonding layer in contact with the top layer of the coating and the inner surface of the glazing which is free of coating (remaining surface 2 or 3).

In a particular embodiment, the coating optionally includes more layers than the first dielectric layer and the first metal-inclusive layer. In particular, the coating may comprise more than one metal-inclusive layers separated from one another by at least one dielectric layer. Such a coating may additionally serve a solar-control function.

*In a particular embodiment, a second dielectric layer is located on top of the first metal-inclusive layer.*

Advantageously, depositing a second dielectric layer on top of the first metal-inclusive layer acts as an additional protective layer. The second dielectric layer presents improved scratch resistance, thus enhancing protection of the touch-sensitive coating from scratching during operative manner and fabrication, particularly handling, processing etc.

*In a particular embodiment, the first dielectric layer comprises at least one material selected from: SiNx, SiOx, SiO_{X}N_{Y}*, *TiOx, TiSiOx.*

*In a particular embodiment, the second dielectric layer is located on top of the first metal-inclusive layer and said second dielectric layer comprises at least one material selected from: SiOx, SiN_{X}, SiO_{X}N_{Y}*, *ZrTiOx, TiOx, TiSiOx, ZrSiOx, ZrSiTiOx, TiN_{X}, ZrOx, or TiZrN_{X}.*

*In a particular embodiment, the first metal-inclusive layer is metal or an alloy comprising at least one element of the following list: Ni, Cr, Ti, Pd, Pt, Zr, or Al, wherein the content of the at least one element is greater or equal to 5 wt.%.*

Advantageously, having a first metal-inclusive layer made of at least one metal from the previous list with a small thickness provides greatest sheet resistance values of said metal-inclusive layer and, thus, the sheet resistance of the whole coating.

*In a particular embodiment, the glazing has* a *visible light transmission Tᵥᵢₛ* of *at least* 5%.

Advantageously, the touch-sensitive coating of the present invention can be an integrated part of a low-emissivity coating applied on surface 4 of a glazing to enhance its thermal insulation.

*In a particular embodiment, the layers of the coating are deposited by magnetron sputtering vapor deposition (MSVD).*

Implementing MSVD provides some advantages compared to other deposition techniques, such as high deposition rates, thickness and compositional uniformity, high adhesion capacities, and well-controlled electrical and optical properties.

*In a particular embodiment, the first metal-inclusive layer is sputter-deposited in a pure argon atmosphere.*

*In another embodiment, the first metal-inclusive layer, e.g., NiCrOx, can be deposited in an oxygen containing atmosphere, such* as a mixture of argon and oxygen

*In a particular embodiment, the first metal-inclusive layer has* a *thickness between 0.2 and 20 nm, preferably between 0.5 and 10 nm.*

Advantageously, the thinner the first metal-inclusive layer is, the higher is the sheet resistance value of said layer, which can be used to accurately control the touch sensitivity. Another way of control is intentional and controllable partial oxidation of said metal layer during deposition.

The touch-sensitive coating of the glazing can benefit from a first dielectric layer having a wide range of thickness, preferably from 10 to 200 nm.

*In a particular embodiment, the first dielectric layer is silicon-based comprising at least one the following: silicon-oxy-nitride, silicon nitride or silicon oxide.*

In this particular case, the first dielectric layer forms a foundation for a good adhesion of the first metal-inclusive layer to the first glass layer and serves as a sodium barrier. Electrically conducting transparent coatings, including those comprising ultra-thin metals and indium-tin-oxide (the functional layer for a low-emissivity coating), are sensitive to the diffusion of alkaline ions from a glass substrate. Such diffusion is known to have an adverse effect on the electrical and optical properties of those layers in a long run.

In a particular embodiment, a thin film of silica (SiOx) is used as a blocking layer to prevent diffusion of sodium and other alkaline elements from glass.

*In another embodiment, the first dielectric layer comprises silicon-oxy-nitride.*

*In yet another embodiment, a silicon nitride layer is used* as *the barrier.*

*In a particular embodiment, the glazing further comprises a second metal-inclusive layer and* a *second dielectric layer, wherein the second dielectric layer is located in between the first and the second metal-inclusive layer, and wherein the second metal-inclusive layer comprises at least one element from the following list: Ni, Cr, Ti, Pd, Pt, Zr, or Al.*

In the previous particular case when the glazing further comprises a second metal-inclusive layer and a second dielectric layer, the total thickness of the touch sensitive coating is still comprised in the previously mentioned range, between 0.2 and 20 nm, and preferably between 0.5 and 10 nm. In an embodiment, an additional dielectric layer, a third dielectric layer can be disposed on top of the second metal-inclusive layer.

In some embodiments, the coating may comprise a successive sequence of layers made of a dielectric layer and a metal-inclusive layer. In these embodiments, the top layer can be either a dielectric layer or a metal-inclusive layer.

*In a particular embodiment, the coating has an interior reflectance Rᵥᵢₛ lower than 10%, preferably lower than 5%, and more preferably lower than 2%.*

Advantageously, having a coating with such a low interior reflectance avoids causing distraction and reflects for a user having the glazing implemented, in a non-limiting example, in a vehicle.

*In a particular embodiment, the glazing further comprises a touch sensing means coupled with the coating, wherein the touch sensing means comprises a plurality of electrodes disposed at the perimeter of the coating and configured for being electrically connected to at least one of the metal-inclusive layers of the coating.*

The coating stack is coupled with a touch sensing means, and said device transmits electric pulses through the coating stack by means of electrodes disposed at the perimeter of the top layer of the coating stack and receives the responding signals from said coating stack. The information about touch event is extracted by analyzing said received signals.

In an embodiment, the plurality of electrodes is arranged in direct electrical contact with the metal-inclusive layer. This can be done, for instance, by firing a copper electrode or an amount of (e.g., silver) paste through the top dielectric layer to bring it in physical contact with the metal-inclusive layer of the touch-sensitive coating.

The disclosed touch-sensitive coating has advantageously been found to work effectively with an electromagnetic background created by other functional coatings of a laminated stack, such as a solar-control, or low-emissivity coating, or a combination of the two.

A pictogram formed by projection, printing, or any other means may be applied on the glazing to work in combination with the disclosed coating for visualizing the location of touch-sensitive areas.

The touch glazing described above can be configured to form a vehicle windshield or roof or side window.

The touch glazing described above can also be configured to form an architectural window. Architectural window may be understood as glazing of a building, a house, or a green house such as glass window, glass door, glass ceiling or glass wall separation.

*In a second inventive aspect,* the *present invention provides a sidelite (*also known as sidelite window) *for a vehicle, wherein the sidelite comprises a glazing according to any of the embodiment, or suitable combination thereof, of the first inventive aspect of the invention.*

In an embodiment, the sidelite comprises a glazing having a single glass layer also called single glass pane.

In a particular embodiment of the sidelite, it comprises a laminated glazing having two glass layer.

*In a third inventive aspect, the present invention provides a roof for* a *vehicle, wherein the roof comprises a glazing according to any of the embodiment, or any suitable combination thereof, of the first inventive aspect of the invention.*

In a particular embodiment of the roof, it comprises a laminated glazing having two or more bonded glass layers.

*In a fourth inventive aspect, the present invention provides an architectural window, wherein the architectural window comprises a glazing according to any of the embodiment, or any suitable combination thereof, of the first inventive aspect of the invention.*

*In a particular embodiment of the third or fourth inventive aspect, the glazing of the roof or the architectural window further comprises an ITO layer located between the first dielectric layer and the first metal-inclusive layer.*

Adding an ITO layer to the glazing of the invention enhances low-emissivity capacities of the coating stack and, thus, of the glazing of the invention.

Preferably, an ITO layer is implemented in a laminated roof with low-emissivity properties.

*In a fifth inventive aspect, the present invention provides a vehicle having at least one sidelite window according to any embodiment of the second inventive aspect and*/*or a roof according to any embodiment of the third inventive aspect.*

The roof glazing of the present invention is intended for vehicles and more particularly for automobiles or automotive roof, such as cars.

In preferred embodiments, the vehicle roof glazing of the present invention is a laminated glazing and comprises two glass layers and one plastic bonding interlayer, preferably PVB.

The term vehicle in the present invention includes, but is not limited to, road vehicles (e.g. cars, busses, trucks, agricultural and construction vehicles, cabin motorbikes), railway vehicles (e.g. locomotives, coaches), aircraft (e.g. airplanes, helicopters), boats, ships and the like. For instance, the vehicle may be a road vehicle and more particularly a car.

*In a sixth inventive aspect, the present invention provides a method for manufacturing a glazing with touch sensing capabilities according to any of the embodiments of the first inventive aspect, the method comprising the steps of:*
*a) providing at least one glass layer,*
*b) depositing a first dielectric layer on at least a portion of one surface of the at least one glass layer, and*
*c) depositing a first metal-inclusive layer on the first dielectric layer.*

In an embodiment, the resulting product from step c) of the method of the fifth inventive aspect of the invention has at least one glass layer, a coating comprising a first dielectric layer and a first metal-inclusive layer.

In an embodiment of the method, the first metal-inclusive layer comprises at least one element from the following list: Ni, Cr, Ti, Pd, Pt, Zr, or Al, and the content of the at least one element is greater or equal to 5 wt.%.

In an embodiment, the resulting product of the method has a coating which is not patterned and has a sheet resistance *Rₛ* between 500 Ω/sq and 100 kΩ/sq, preferably around 10 kΩ/sq.

In a preferred embodiment of the method, the at least one glass layer is a laminated glazing having a first glass layer, a second glass layer and a plastic layer bonding the first glass layer together with the second glass layer. In this embodiment, the coating stack is located either on surface 2, surface 3 or surface 4 of a laminated glazing having two glass layers.

In embodiments of the method where the coating is deposited on surface 2 or surface 3 of the laminated glazing having two glass layers, the top layer of the coating stack is bonded to the inner surface which does not present any coating by means of a bonding layer, such as PVB. In these embodiments, surface 1 and surface 4, the outer surfaces of the glazing, are both free of the coating of the invention.

*In a particular embodiment of the sixth inventive aspect, the method further comprising a step d) of depositing a second dielectric layer on the first metal-inclusive layer.* Having a dielectric layer on top of the coating stack enhances the protection of the touch-sensitive coating from scratching during operative manner and fabrication, particularly handling, processing etc.

*In a particular embodiment of the sixth inventive aspect, the method further comprising a step e) of depositing a second metal-inclusive layer on the second dielectric layer (4.2).*

*In a particular embodiment of the sixth inventive aspect, the method further comprising a step of, before step c), depositing an ITO layer on the first dielectric layer, and wherein the first metal-inclusive layer of step c) is deposited on the ITO layer.*

*In a particular embodiment of the sixth inventive aspect, the depositing steps of the method are made by magnetron sputtering vapor deposition (MSVD).*

This type of deposition methods *(MSVD)* are performed at a controlled temperature and pressure atmosphere.

As an example, the MSVD can be performed in an oxygen containing atmosphere, such as a mixture of argon and oxygen.

*In a particular embodiment of the sixth inventive aspect, after the last step, the method further comprises a step of bending the resulting product.*

In an embodiment of the method, the final product is bent in order to provide a particular shape to said product. In order to bend the final product, the at least one glass layer having the coating stack already deposited on one of its surface is bent at a temperature between 600 to 680 degrees Celsius and then, in the particular case of having a plurality of glass layers, the thermoplastic bonding layer is placed in between the glass layers and finally cured at a temperature between 100 and 150 degrees Celsius.

### DESCRIPTION OF THE DRAWINGS

These and other features and advantages of the invention will be seen more clearly from the following detailed description of a preferred embodiment provided only by way of illustrative and non-limiting example in reference to the attached drawings.
- Figure 1: This figure shows layers of a laminated glazing according to a first step of a first embodiment of the invention.
- Figure 2: This figure shows a laminated glazing according to a second step of the first embodiment of the invention.
- Figure 3: This figure shows a laminated glazing according to a third step of the first embodiment of the invention.
- Figure 4: This figure shows a laminated glazing according to a second embodiment of the invention.
- Figure 5: This figure shows a laminated glazing according to a third embodiment of the invention.
- Figure 6: This figure shows a laminated glazing according to a fourth embodiment of the invention.

### DETAILED DESCRIPTION OF THE INVENTION

As will be appreciated by one skilled in the art, aspects of the present invention may be embodied as a product or method.

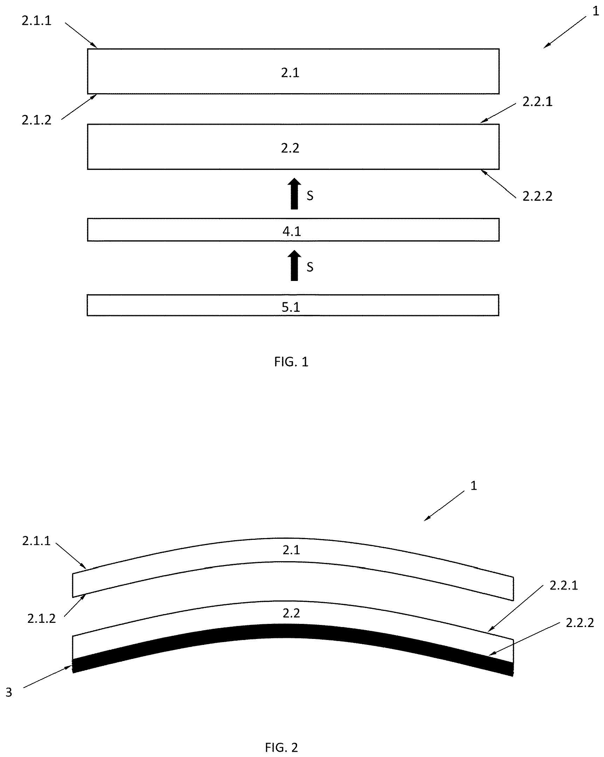

Figure 1 depicts non-bonded layers of a glazing (1) according to a first embodiment of the invention. In this first example, the glazing (1) shows a first glass layer (2.1) and a second glass layer (2.2) and the sequence of layers before laminating or depositing steps of manufacturing.

In the example of Figure 1, the first glass layer (2.1) has an outer surface (2.1.1) and an inner surface (2.1.2). Furthermore, the second glass layer (2.2) has an inner surface (2.2.1), oriented towards the inner surface (2.1.2) of the first glass layer (2.1), and an outer surface (2.2.2) oriented towards the opposite direction.

As shown in Figure 1, a first dielectric layer (4.1) is deposited on the outer surface (2.2.2) of the second glass layer (2.2) by magnetron sputtering vapor deposition (S). Then, a first metal-inclusive layer (5.1) is deposited by magnetron sputtering vapor deposition (S) on top of the first dielectric layer (4.1), on the opposite side which is in contact with the second glass layer (2.2).

In examples of the invention, the first dielectric layer (4.1) is deposited in a pure argon atmosphere.

In examples of the invention, the first metal-inclusive layer (5.1) is deposited by MSVD in an oxygen, or nitrogen, containing atmosphere, such as a mixture of Ar+O₂ or Ar+N₂.

The first embodiment of the glazing (1) shown in Figure 1 may be a laminated automotive sidelite with a touch-compatible coating (3) deposited on surface 4. As a particular example of the first embodiment, the coating (3) comprises a SiOxNy dielectric layer having a 55 nm thick layer, and a sub-stoichiometric NiCrOx layer, 3 nm thick. The total *Tvis* of the laminate of this first embodiment is 71%. FPC electrodes are applied directly onto the metallic layer of the coating. The applicant has proven that the glazing of this first embodiment has a sheet resistance of 10 kΩ/sq.

Figure 2 shows the glazing (1) of the first embodiment shown in Figure 1 in a subsequent second manufacturing step, wherein the first glass layer (2.1) and the second glass layer (2.2) (with the coating (3) stack deposited on it) are bent at high temperature (around 630 to 650 °C) together (using the same mold to align the shape). The inner elements that form the coating (3) stack, i.e. the first dielectric layer (4.1) and the first metal-inclusive layer (5.1), are not shown in Figure 2.

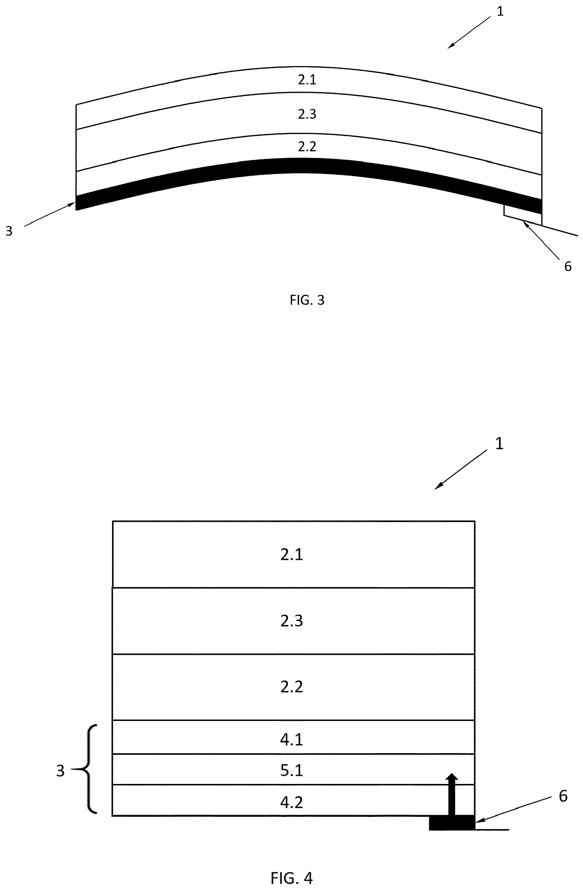

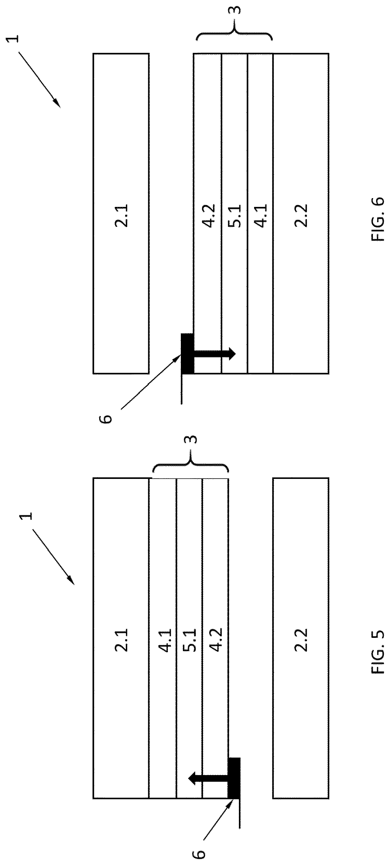

Figure 3 shows the glazing (1) of the first embodiment shown in Figures 1 and 2 in a subsequent third manufacturing step, particularly after laminating and bending processes. The first glass layer (2.1) and the second glass layer (2.2) (with the first dielectric layer (4.1) and the first metal-inclusive layer (5.1) coating (3) stack on it) has been bonded together by a bonding layer (2.3). In embodiments of the invention, the bonding layer (2.3) is PVB and said bonding layer (2.3) is placed on the respective inner surfaces of the first glass layer (2.1) and the second glass layer (2.2). The bonding layer (2.3) is laminated together with the two glass sheets at a temperature around 130 to 150 °C. In this manufacturing step, the coating (3) is now on surface 4). Finally, in the particular example depicted in Figure 3, a touch sensing means (6) is placed on top of the coating (3) on surface 4. Said touch sensing means (6) comprises a plurality of electrodes disposed at the perimeter of the coating (3), see Figure 6, and configured for being electrically connected the metal-inclusive layer (5) of the coating (3) which is closer to the top of the coating (3) stack.

According to the invention, the first metal-inclusive layer (5.1) comprises at least one element of the following list: Ni, Cr, Ti, Pd, Pt, Zr, or Al. Additionally, the content of the at least one element is greater or equal to 5 wt.%.

Also, according to the invention, the coating (3) is not patterned and has a sheet resistance *Rₛ* between 500 Ω/sq and 100 kΩ/sq.

Figure 4 depicts a laminated glazing (1) of a second embodiment of the invention, similar to the laminated glazing (1) of the first embodiment, except that the touch-compatible coating (3) is topped with a second dielectric layer (4.2) acting as a mechanically protective layer. In this second embodiment, all steps are the same as the first embodiment and are shown in a flat view to simplify the drawings. In that example, the second dielectric layer (4.2) is ZrOx and is added to the coating (3) in step 1 along with the first dielectric layer (4.1) and the first metal-inclusive layer (5.1) to form the coating (3) stack, so formed by first dielectric layer (4.1) plus the first metal-inclusive layer (5.1) plus the second dielectric layer (4.2). All three layers (4.1, 5.1, 4.2) are sputtered onto the second glass layer (2.2).

Therefore, the laminated glazing (1) of a second embodiment of the invention comprises a first glass layer (2.1) bonded together with a second glass layer (2.2) thanks to a bonding layer (2.3). In the example of Figure 4, the coating (3) is located on the outer surface of the second glass layer (2.2). In this particular example, the coating (3) stack comprises a first dielectric layer (4.1) located on top of the second glass layer (2.2), a first metal-inclusive layer (5.1) on top of the first dielectric layer (4.1) and a second dielectric layer (4.2) on top of the first metal-inclusive layer (5.1). In this example, the top layer of the coating (3) is the second dielectric layer (4.2) and, on top of this layer, a touch sensing means (6) is placed at the perimeter of the coating (3). The electrodes of the touch sensing means (6) are applied to the first metal-inclusive layer (5.1) which is the metal-inclusive layer the closest to the top layer of the coating (3) stack and these electrodes are applied by firing techniques known in the art in order to penetrate through the top dielectric layer, in that particular example, the second dielectric layer (4.2).

The second embodiment of the glazing shown in Figure 4 may also be a laminated automotive sidelite or a roof with a touch-compatible coating deposited on surface 4. According to a first particular example of the second embodiment, the coating (3) comprises a first dielectric layer (4.1) of SiOxNy having a 55 nm thick layer, and a sub-stoichiometric first metal-inclusive layer (5.1) of NiCrOx having a 3 nm thick layer and a second protective dielectric layer (4.2) of ZrOx having a 48 nm thick layer.

Additionally, a busbar is applied to the first metal-inclusive layer (5.1) through the second dielectric layer (4.2) by firing. Then, FPC electrodes (6) are then applied to the busbar. The ZrOx layer is fully oxidized and is, preferably, stoichiometric. For that reason, no percentage of Zr is included in this case. Total *Tvis* of the laminated glazing (1) of this second embodiment is 71%. The applicant has proven that the glazing (1) of this first example of the second embodiment has a sheet resistance of 15 kΩ/sq.

According to a second particular example of the second embodiment, the coating (3) comprises the same elements as the first example of the second embodiment except that the first metal-inclusive layer (5.1), being a sub-stoichiometric NiCrOx, is replaced by an alloy of CrSi having a percentage of Cr in the alloy of 95 wt.%. All method steps are the same as the first particular example of the second embodiment, except NiCrOx is replaced by CrSi in step 1. Total *Tvis* of the laminate is 71%. The applicant has proven that the glazing of this second example of the second embodiment has a sheet resistance of 17 kΩ/sq.

According to a third particular example of the second embodiment, the coating (3) comprises the same elements and thick layers as the first example of the second embodiment, except that the first metal-inclusive layer (5.1) is a NiCrOx with a particular percentage of Ni in the alloy of 55 wt.% and the content of oxygen is 10%. All method steps are the same as the first particular example of the second embodiment. Total *Tvis* of the laminated glazing (1) is 71%. The applicant has proven that the glazing (1) of this third example of the second embodiment has a sheet resistance of 2 kΩ/sq.

According to a fourth particular example of the second embodiment, the coating (3) comprises the same elements and thick layers as the coating (3) of the first example of the second embodiment, except that a ZrOx second protective dielectric layer (4.2) having a 48 nm thick layer is replaced by a SiO₂ second protective dielectric layer (4.2). All method steps are the same as the first particular example of the second embodiment. The busbar is applied to the first metallic layer (5.1) through the second dielectric layer (4.2) by firing. The FPC electrodes (6) are then applied to the busbar. The electrode is subjected to a high temperature, known in electronics as 'firing', to penetrate through the SiO₂ dielectric. Total *Tvis* of the laminate is 7%. The applicant has proven that the glazing of this fourth example of the second embodiment has a sheet resistance of 10 kΩ/sq.

In other examples of the second embodiment where the top layer of the coating (3) stack is a metal-inclusive layer, then the plurality of electrodes of the touch sensing means (6) are applied directly on the top layer in order to receive the responding signals from the coating (3) stack.

Figure 5 and 6 show respective embodiments of a glazing (1) according to a third and fourth embodiment of the invention before laminating. In both examples, the coating (3) is located in between the two glass layers (2.1, 2.2), more particularly on the inner surface of the first glass layer (2.1) and the second glass layer (2.2) respectively.

In Figure 5, the coating (3) is located on the inner surface of the first glass layer (2.1) and comprises a first dielectric layer (4.1) on top of the inner surface of the first glass layer (2.1), a first metal-inclusive layer (5.1) on top of the first dielectric layer (4.1) and a second dielectric layer (4.2) on top of the metal-inclusive layer (5.1). The top layer of the coating (3) is the second dielectric layer (4.2) and the touch sensing means (6) is placed on top of said top layer of the coating (3). In that example, the electrodes of the touch sensing means (6) are applied by firing techniques in order to penetrate through the second dielectric layer (4.2) by means of diffusion of metal atoms and provide contact with the first metal-inclusive layer (5.1).

In that particular example, represented in Figure 5, the top layer of the coating (3) is oriented towards the inner surface of the second glass layer (2.2).

In further steps of manufacturing a laminated glazing (1) of the invention, the top layer of the coating (3) is bonded to the inner surface of the second glass layer (2.2) thanks to a bonding layer (not shown in this Figure) and the whole glazing (1) is further laminated and bent.

According to a first particular example of the third embodiment of Figure 5, the coating (3) comprises a SiO_{X}N_{Y} first dielectric layer (4.1) having a 55 nm thick layer, and a sub-stoichiometric NiCrOx first metal-inclusive layer (5.1) having a 3 nm thick layer and a SiO₂ second protective dielectric layer (4.2) having a 48 nm thick layer. This first particular example of the third embodiment is similar to the automotive laminate of the fourth particular example of the second embodiment, except that the coating (3) is located on surface 2. Total *Tvis* of the laminated glazing is 7%. The applicant has proven that the glazing of this fourth example of the second embodiment has a sheet resistance of 10 *k*Ω/*sq.* The electrodes of the touch sensing means (6) is applied to the NiCrOx (now the coating (3) stack is on surface 2) by firing technic through the SiO₂ second dielectric layer (4.2) in order to reach the closest metal-inclusive layer. Then the two sheets of glass (2.1, 2.2) are laminated together. The electrode (6) extends outside the lamination to have electrical access to the circuitry.

In Figure 6, the coating (3) is located on the inner surface of the second glass layer (2.2) and comprises a first dielectric layer (4.1) on top of the inner surface of the second glass layer (2.2), a first metal-inclusive layer (5.1) on top of the first dielectric layer (4.1) and a second dielectric layer (4.2) on top of the metal-inclusive layer (5.1). The top layer of the coating (3) is the second dielectric layer (4.2) and the touch sensing means (6) is placed on top of said top layer of the coating (3). In that example, the electrodes of the touch sensing means (6) are applied by firing techniques in order to penetrate through the second dielectric layer (4.2) and provoke contact with the first metal-inclusive layer (5.1).

In that particular example, the top layer of the coating (3) is oriented towards the inner surface of the first glass layer (2.1).

In further steps of manufacturing a laminated glazing (1), the top layer of the coating (3) is bonded to the inner surface of the first glass layer (2.1) thanks to a bonding layer (not shown in this Figure) and the whole glazing (1) is further laminated and bent.

According to a particular example of the fourth embodiment of Figure 6, the coating (3) comprises a SiO_{X}N_{Y} first dielectric layer (4.1) having a 55 nm thick layer, and a sub-stoichiometric NiCrOx first metal-inclusive layer (5.1) having a 3 nm thick layer and a SiO₂ second protective dielectric layer (4.2) having a 48 nm thick layer. This particular example of the fourth embodiment is similar to the automotive laminate of the fourth particular example of the second embodiment, except that now the coating (3) is deposited on surface 3. Note that the SiO₂ layer with the fired electrode is on top of the coating (3) stack. After the electrodes (6) are applied, the first glass layer (2.1) and the second glass layer (2.2), with the coating (3) stack on it, go through lamination step. The total *Tvis* of the laminated glazing is 7%.

## Claims

1. A glazing (1) with touch sensing capabilities for a vehicle, the glazing (1) having at least one glass layer having an outer surface (2.1.1, 2.2.2) and an inner surface (2.1.2, 2.2.1), and further comprising:
- a coating (3) located on at least a portion of at least one of the outer surfaces (2.1.1, 2.2.2) or at least one of the inner surfaces (2.1.2, 2.2.1) of the at least one glass layer, wherein the coating (3) comprises:
- a first dielectric layer (4.1), and
- a first metal-inclusive layer (5.1),
wherein
the first dielectric layer (4.1) is deposited between the at least one glass layer and the first metal-inclusive layer (5.1),
the first metal-inclusive layer (5.1) comprises at least one element from the following list: Ni, Cr, Ti, Pd, Pt, Zr, or Al, and
the content of such at least one element is greater or equal to 5 wt.%,
and wherein,
the coating (3) is not patterned and has a sheet resistance *Rₛ* between 500 Ω/*sq* and 100 *k*Ω/*sq.*

2. The glazing (1) according to the preceding claim, wherein the at least one glass layer comprises a first glass layer (2.1), a second glass layer (2.2) and at least one bonding layer (2.3) between the first (2.1) and the second (2.2) glass layer.

3. The glazing (1) according to any of the preceding claims, wherein the first dielectric layer (4.1) comprises one material selected from: *SiN_{X}, SiO_{X}, SiO_{X}N_{Y}*, *TiO_{X}, TiSiO_{X}.*

4. The glazing according to claim 3, wherein a second dielectric (4.2) layer is located on top of the first metal-inclusive layer (5.1) and the second dielectric layer (4.2) comprises one material selected from: *SiO_{X}, SiN_{X}, SiO_{X}N_{Y}*, *ZrTiO_{X}, TiO_{X}, TiSiO_{X}, ZrSiO_{X}, ZrSiTiO_{X}, TiN_{X}, ZrOx, or TiZrN_{X}.*

5. The glazing (1) according to any of the preceding claims, wherein the glazing (1) has a visible light transmission *Tᵥᵢₛ* of at least 5%.

6. The glazing (1) according to any of the preceding claims, wherein the first metal-inclusive layer (5.1) has a thickness between 0.2 and 20 nm, preferably between 0.5 and 10 nm.

7. The glazing (1) according to any of the preceding claims, wherein the coating (3) has an interior reflectance *Rᵥᵢₛ* lower than 10%, preferably lower than 5%, more preferably lower than 2%.

8. The glazing (1) according to any of the preceding claims, wherein the glazing (1) further comprises a touch sensing means (6) coupled with the coating, wherein the touch sensing means (6) comprises a plurality of electrodes disposed at the perimeter of the coating (3) and configured for being electrically connected to at least one of the metal-inclusive layers (5) of the coating (3).

9. A sidelite window, or a roof for a vehicle, or an architectural window, comprising the glazing (1) according to any of the preceding claims.

10. The roof or architectural window according to the preceding claim, wherein the glazing (1) further comprises an ITO layer (7) located between the first dielectric layer (4.1) and the first metal-inclusive layer (5.1).

11. A vehicle having at least one sidelite window according to claim 9 or having a roof according to claim 9 or 10.

12. A method for manufacturing a glazing (1) with touch sensing capabilities according to any of claims 1 to 8, the method comprising the steps of:
a) providing at least one glass layer,
b) depositing a first dielectric layer (4.1) on at least a portion of one surface of the at least one glass layer,
c) depositing a first metal-inclusive layer (5.1) on the first dielectric layer (4.1).

13. The method according to the preceding claim, wherein the method further comprising a step d) of depositing a second dielectric layer (4.2) on the first metal-inclusive layer (5.1).

14. The method according to any of claims 12 to 13, wherein the depositing steps of the method are made by MSVD.

15. The method according to any of claims 12 to 14, wherein after the last step, the method further comprises a step of bending the resulting product.
